# EUROPEAN PATENT APPLICATION

(11) **EP 2 346 282 A1**
(43) Date of publication of application: **20.07.2011**
(21) Application number: 10305040.7
(22) Date of filing: 13.01.2010
(51) Int. Cl.: H04W 36/04

(54) **Management of handovers between an E-node-B and a home E-node-B**

(71) Applicant: ST-Ericsson (France) SAS, 38000 Grenoble (FR); ST-Ericsson SA, 1228 Plan-les-Ouates (CH)
(72) Inventor: Sfar, Safouane, 72000, LE MANS (FR)
(74) Representative: Cabinet Plasseraud

(57) **Abstract**

A method for managing a handover between a first cell of a LTE network and a second cell of the network, the second cell being a femtocell and the method comprising the following steps carried out on the network side:
- sending a measurement request to a terminal for receiving a measurement report containing information representing communication conditions in the second cell, when the terminal is localised in a vicinity of the second cell; and, when the report is received,
- deciding, based on the information in the report, whether to perform or not a handover from the first cell to the second cell.

## Description

### Technical Field

The present invention relates to the management of handover procedures between two radio cells of a telecommunication network.

In particular, the present invention relates to the management of handovers towards femtocells of Long Term Evolution networks (LTE).

### Background of the invention

In mobile telecommunications, a femtocell is a small zone covered by a small base station (like node-B). Femtocells may be designed for what is called residential use in applications such as small enterprise networks or home networks.

In a known use, a user has a home device from which he has access to telecommunication services (Internet, telephony ...) and which also serves as a base station covering an indoor cell. When the user is away from home, he uses the outdoor network of its service provider, and when the users gets back home, its telecommunications services are transferred to the home device serving as a base station.

The use of femtocells is increasing since the signals used for carrying communications are of high frequency. Indeed, high frequencies do not penetrate deep into the buildings.

Femtocells are used for providing the users with a good continuity of service. Then, there is a need for managing the transfer of communications from outdoor cells to indoor cells.

### Prior art

In UMTS networks, these transfers, or handovers, are initiated and controled by the terminals themselves. When a terminal detects a femtocell, it requests a handover from the network for transferring the communications to the femtocell.

Hence, handover is not managed by the network which can only accept or reject the handover request.

This procedure is different from other procedures for inter RAT handovers (Radio Access Technology), wherein the handover is completely managed by the network. For example for transferring a communication from a 3G network to a 2G network, the network decides, based on the quality of communications in the 3G network, whether or not the communication should be transferred. In case quality of communication is too low in the 3G network, it decides the transfer. In fact, the network knows the presence of the radio signals of the 2G network and then it transfers the communication if the quality of service on the 2G network is enough good.

### Summary of the invention

There is a need for improving handover mechanisms in LTE networks for transferring communications to femtocells.

To that end there is provided, according to a first aspect of the invention, a method for managing a handover between a first cell of an LTE network and a second cell of the network, the second cell being a femtocell and the method comprising the following steps which are carried out on the network side:
- sending a measurement request to a terminal for receiving a measurement report containing information representing communication conditions in the second cell, when the terminal is localised in a vicinity of the second cell; and, when the report is received,
- deciding, based on the information in the report, whether to perform or not a handover from the first cell to the second cell.

Femtocells are thus assimilated to a particular RAT (Radio Access Technologies) and the handover process is managed on the network side.

Hence, when implementing a protocol stack, a mobile terminal manufacturer does not have to develop particular protocols for handling handovers to femtocells.

With the present invention, handovers to femtocells may be implemented by using already existing protocol stacks structures. Then, development of mobile terminals compatible with LTE (Long Term Evolution) networks is facilitated. This results in a reduction of costs associated to the development of handovers protocols.

For example, the measurements comprise a measurement of quality of communications, in terms of Signal to noise ration and/or bit error rate, for instance.

The method may further comprise:
- localising the terminal by a positioning technology; and
- comparing the localisation of the terminal to a known localisation of the second cell for determining whether the terminal is in the vicinity of the second cell.

In embodiments of the invention, the method may further comprise an automatic real time adaptation of a user profile associated to a user of the terminal for managing the communications in the second cell.

The use of the terminal within the femtocell may be different from the use of the terminal outside the femtocell. For example, when the femtocell is a residential femtocell, the user may need less services or different services from those he needs outside. Also, since the infrastructures used for handling the communications are different inside and outside the femtocell, the service provider may apply a different price setting for the communications for example billing the communications in a femtocell less than other communications.

According to other aspects of the invention, there is also provided:
- a computer program comprising instructions for executing a method according to the first aspect when the program is executed by a processor;
- a computer program product for storing the computer program; and
- a device for implementing a method according the first aspect.

These objects provide at least the same advantages as those associated to the method.

Other advantages are obtained by additional features which are recited in the dependent claims attached hereto.

### Brief description of the drawings

Other features and advantages of the invention will become apparent from the following description of non-limiting exemplary embodiments, with reference to the appended drawings, in which:
- Figure 1 is a schematic illustration of a context of implementation of embodiments of the invention;
- Figure 2 illustrates data flows exchanged between a terminal and a management unit of a network according to embodiments of the invention;
- Figure 3 is a flowchart illustrating steps of a method according to embodiments of the invention; and
- Figure 4 is a schematic illustration of a device according to embodiments of the present invention.

### Detailed description of embodiments of the invention

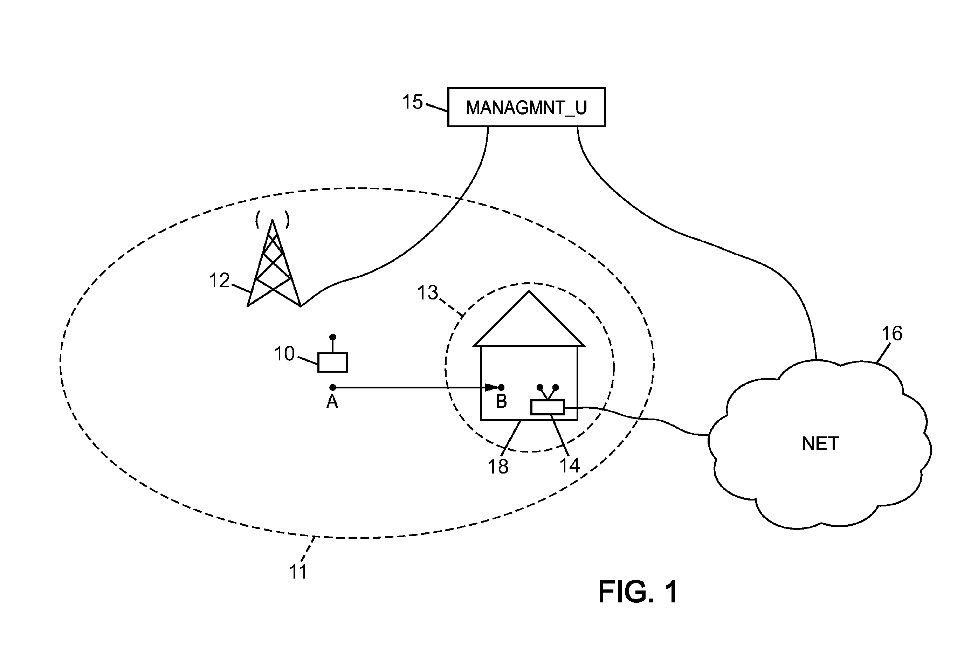

Figure 1 illustrates a context of implementation of embodiments of the invention. A mobile telecommunication device 10 is moving from a position A to a position B. Position A is in a coverage area 11 of a first network element 12 (such as an e-Node-B) of an LTE telecommunication network. Position B is in a coverage area 13 of a second network element 14 of the network (such as an internet connection device also serving as a Home e-Node-B) which is disposed in a building 18. Position A is outside coverage area 13.

Network element 12 is connected to a management unit 15 which manages communications over the network. Network element 14 is also connected to management unit 15 through Internet (network 16).

When terminal 10 is approaching coverage area 13, the management unit transfers the communications of terminal 10 from network element 12 to network element 14. Hence, quality of the communications is preserved even if terminal 10 entered a building wherein electromagnetic signals emitted by network element 12 are not penetrating very deep inside.

In order to perform such a transfer (or handover), the management unit has a knowledge of the localisation of the terminal 10. For example, the network may localize terminal 10 using global positioning technology (GPS). Alternatively, or in combination, the management unit may use the knowledge of the geographical position of network element 12 and the fact that terminal 1 is under the coverage of network element 12.

The management unit has also knowledge of the localisation of network element 14. For example, it knows its GPS coordinates or towards Geographic Information System.

Then, management unit 15 may compare the localisation of terminal 1 to the localisation of network element 14 and determine whether or not terminal 1 is in a vicinity of coverage area 13.

In case terminal 10 is in this area, management unit 15 may determine that a handover is possible and thus request measurements for confirming that handover is possible.

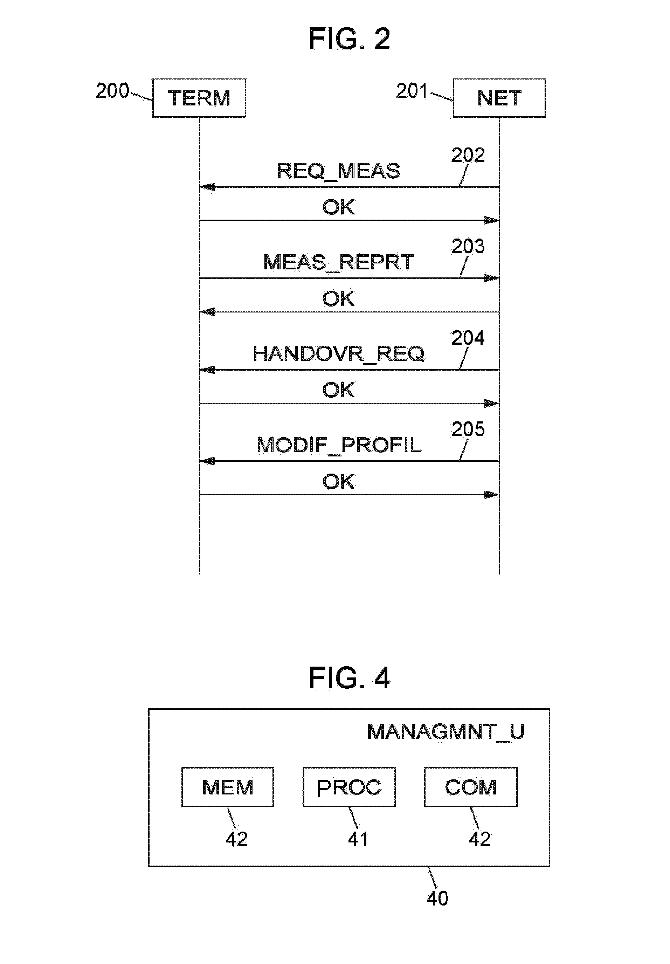

Figure 2 illustrates the data flows exchanged between a terminal 200 and a management unit 201 of a communication services provider.

When the management unit 201 detects that terminal 200 is in the vicinity of a femtocell, it requests a measurement report for assessing the communication conditions in the femtocell. To that purpose, it sends a request 202 to the terminal. In response, terminal 202 acknowledges receipt of the request. Then, it sends a measurement report 203. For example, the terminal performs a series of quality measurement such as the measurement of the power of the communications signals in the femtocell the SNR (Signal to Noise Ratio) or other parameters suitable for assessing the communication conditions in the femtocell as it will be apparent to the person with ordinary skill in the art.

Upon receipt of the report, the management unit acknowledges receipt and based on the measurement report, it decides to perform a handover towards the femtocell. For example, it has determined from the report that communication quality is good enough for transferring the communication in the femtocell. To that purpose, it sends a handover request 204 to the terminal. Then, the terminal acknowledges receipt of the request and a handover procedure is launched pursuant to techniques known to the person with ordinary skill in the art.

The management unit may also send a request 205 for adapting a user profile of the user of the terminal for adapting the services to the femtocell. For example, the interface with the network may change. Also, the rate base for billing the communications may change. Indeed, since the user has its communications handled by the femtocell, the outdoor network is released which increases the bandwidth available for other users. Then, in order to promote the use of femtocells a service provider may apply an advantageous rate base for femtocell users.

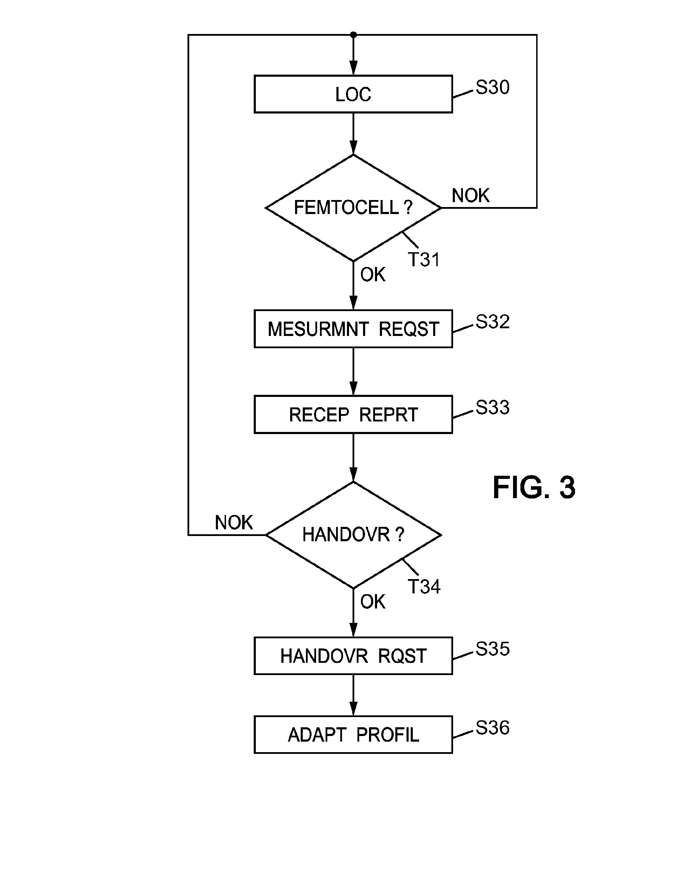

Figure 3 is a general flowchart that summarizes steps performed according to an embodiment.

In step S30 a management unit of the network performs a localisation of the terminal. In step T31, it determines whether or not the terminal is in a vicinity of a femtocell. In case the terminal is in a vicinity of a femtocell, it requests in step S32 a measurement report for determining whether a transfer in the femtocell is possible. For example, the report may comprise an indication on an authorisation for the terminal to access the femtocell (in order to avoid femtocell piracy, such as unduly using the femtocell of a neighbour), or communication quality measurements. In step S33 the management unit receives the management report, and then in step T34 it decides based on the report to perform a handover or not. In case it determines to perform the handover, it sends in step S35 a handover request to the terminal. The management unit may also send a request for adapting the user profile to the femtocell in step S36.

A computer program comprising instructions for executing the steps of the method described above may be designed based on an algorithm derived from the general flowchart depicted in Figure 3 and the present description.

Such a computer program may be based on the following pseudocode.

```
Handover_management()
       
      LOCALIZE() → LOC;
      FOR i = 1 to SIZE(LIST_LOC_FEMTO)
             IF (LOC = LIST_LOC_FEMTO(i))
                   Measurmnt_request();
             END;
      END;
      WAIT(recept(REPORT));
      Decide_Handover(REPORT) --> DECISION;
      IF (DECISION = TRUE)
             Handover request();
             User_prof!!e_adaptat!on_request();
      END;
 END;
```

Function LOCALIZE() is a dedicated function for localizing terminals. This function may return GPS coordinates of the terminal. The returned coordinates are then stored in variable LOC. Then variable LOC is compared to localizations of femtocells of the networks. The localizations of the femtocells are stored in a table LIST_LOC_FEMTO. This table may store a range of coordinates for each femtocell. Thus, it is possible to determine the area chosen for defining the vicinity of the femtocell. If the localization of the terminal is in the vicinity of a femtocell, function Measurmnt_request() is called. This function is a dedicated function for sending to the terminal a request for measurements of communication conditions in the femtocell. Then, the handover management function Handover management() is paused until the measurement report is received. Once, the report is received, the Decide_Handover() function is called with the report as an argument. This function is dedicated to analysing the report for determining whether a handover to the femtocell is possible. For example, the function performs test on measurements values of the report such as comparisons to threshold values. Function Decide_Handover() returns a Boolean which is TRUE when the handover is possible and FALSE when the handover is not possible. When the function Decide_Handover() returns TRUE, functions Handover_request() and User_profile_adaptation_request() are called. These functions are respectively dedicated to sending to the terminal a request for preparing to a handover towards the femtocell and sending a request for modifying the user profile used for managing the communications so as to adapt to the femtocell use.

Referring to Figure 4, a mobile communication device 40 according to the present invention is described. The device comprises a processing unit 41 for implementing a method according to embodiments of the invention. To that purpose, the device comprises a memory unit 42. The memory unit may comprise several types of memory. For example, the memory unit may comprise a memory for storing processing data. The memory unit may also comprise a memory for storing a computer program according to embodiments of the invention. The device also comprises a communication unit 43 for performing communications over the networks.

While the invention has been illustrated and described in details in the drawings and foregoing description, such illustration and description are to be considered illustrative and exemplary only, the invention being not restricted to the disclosed embodiments. Other variations to the disclosed embodiments can be understood and effected by those skilled in the art in practicing the claimed invention, from a study of the drawings, the disclosure and the appended claims.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method for managing a handover between a first cell (11) of an LTE network and a second cell (13) of said network, the second cell being a femtocell and the method comprising the following steps which are carried out on the network side:
- sending a measurement request (S32) to a terminal for receiving a measurement report containing information representing communication conditions in the second cell, when the terminal is localised in a vicinity of the second cell; and, when the report is received,
- deciding (T34), based on the information in the report, whether to perform or not a handover from the first cell to the second cell.

2. A method according to claim 1, wherein the measurements comprise a measurement of quality of communications.

3. A method according to any of the preceding claims, further comprising:
- localising the terminal by a positioning technology; and
- comparing the localisation of the terminal to a known localisation of the second cell for determining whether the terminal is in the vicinity of the second cell.

4. A method according to any of the preceding claims, further comprising an automatic real time adaptation of a user profile associated to a user of the terminal for managing the communications in the second cell.

5. A computer program comprising instructions for implementing the steps of a method according to any one of claims 1 to 4 when loaded and run on computer means of a mobile telecommunication device.

6. A device comprising:
- a control unit (41) for managing a handover between a first cell of a LTE network and a second cell of said network, the second cell being a femtocell; and
- a communication unit (43) for communicating with a terminal;
wherein the control unit is configured for managing the handover according to any one of claims 1 to 4.
